# FASCICULE DE BREVET EUROPEEN

(11) **EP 0 861 116 B1**
(45) Date de publication et mention de la délivrance du brevet: **12.12.2001**
(21) Numéro de dépôt: 96931848.4
(22) Date de dépôt: 16.09.1996
(51) Int. Cl.: B01D 53/94, B01J 23/34, B01J 23/889

(54) **PROCEDE DE TRAITEMENT CATALYTIQUE DE GAZ, A TENEUR ELEVEE EN OXYGENE, EN VUE DE LA REDUCTION DES EMISSIONS DES OXYDES D'AZOTE**
METHODE ZUR KATALYTISCHEN BEHANDLUNG VON GASEN MIT HOHEM SAUERSTOFFGEHALT ZUR REDUKTION VON STICKOXID-EMISSIONEN
METHOD FOR CATALYTICALLY PROCESSING GASES WITH A HIGH OXYGEN CONTENT TO REDUCE NITROGEN OXIDE EMISSIONS

(30) Priorité: 20.09.1995 FR 9511020
(43) Date de publication de la demande: 02.09.1998
(73) Titulaire: RHODIA CHIMIE, 92408 Courbevoie Cédex (FR)
(72) Inventeur: BARTHE, Philippe, F-95270 Saint-Martin-du-Tertre (FR); HEDOUIN, Catherine, F-60500 Chantilly (FR); SEGUELONG, Thierry, F-92800 Puteaux (FR)
(74) Mandataire: Dubruc, Philippe
(86) Numéro de dépôt international: FR9601430
(87) Numéro de publication internationale: WO9710892

(56) Documents cités:
- EP-A- 0 488 331
- EP-A- 0 624 393
- EP-A- 0 661 089
- EP-A- 0 667 182
- FR-A- 2 582 964

## Description

La présente invention concerne un procédé de traitement de gaz, notamment de gaz d'échappement de moteurs à combustion interne, à teneur élevée en oxygène, en vue de la réduction des émissions des oxydes d'azote.

On sait que la réduction des émissions des oxydes d'azote (NOx) des gaz d'échappement des moteurs d'automobiles notamment est effectuée à l'aide de catalyseurs "trois voies" qui utilisent stoechiométriquement les gaz réducteurs présents dans le mélange. Tout excès d'oxygène se traduit par une détérioration brutale des performances du catalyseur.

Or, certains moteurs comme les moteurs diesel ou les moteurs essence fonctionnant en mélange pauvre (lean burn) sont économes en carburant mais émettent des gaz d'échappement qui contiennent en permanence un large excès d'oxygène d'au moins 5% par exemple. Un catalyseur trois voies standard est donc sans effet sur les émissions en NOx de ces moteurs. Par ailleurs, la limitation des émissions en NOx est rendue impérative par le durcissement des normes en post combustion automobile qui s'étendent maintenant à ce type de moteurs.

Il existe donc un besoin réel d'un catalyseur efficace pour la réduction des émissions des NOx pour ce type de moteurs et, plus généralement, pour le traitement de ce type de gaz.

L'objet de l'invention est donc de trouver un catalyseur qui puisse être utilisé pour le traitement de gaz d'échappement à teneur élevée en oxygène.

Dans ce but, le procédé selon l'invention, pour le traitement d'un gaz, à teneur élevée en oxygène, en vue de la réduction des émissions des oxydes d'azote, le gaz présentant un excès d'oxygène par rapport à la valeur stoechiométrique λ = 1 ou présentant une teneur en oxygène (exprimée en volume) d'au moins 5%, est caractérisé en ce qu'on utilise une composition catalytique consistant en de l'oxyde de manganèse déposé sur un support d'oxyde de cérium ou d'oxyde de zirconium ou d'un oxyde mixte de cérium et de zirconium.

D'autres caractéristiques, détails et avantages de l'invention apparaîtront encore plus complètement à la lecture de la description qui va suivre, ainsi que des divers exemples concrets mais non limitatifs destinés à l'illustrer.

En ce qui concerne le cérium ou le zirconium, on utilise de préférence un oxyde adapté aux applications en catalyse, c'est à dire un oxyde susceptible notamment de conserver une surface spécifique suffisante à des températures élevées.

A titre d'exemple, on peut citer les oxydes de cérium décrits dans les demandes de brevets français FR-A-2559754 et FR-A-2640954.

Le manganèse est présent dans une quantité exprimée en teneur atomique en manganèse par rapport au nombre de moles d'oxyde de cérium et d'oxyde de zirconium qui est de préférence d'au plus 50%. Cette teneur peut être plus particulièrement d'au plus 20%. La teneur minimale en manganèse est habituellement d'au moins 0,5%. Généralement, la teneur en manganèse est comprise entre 5 et 20%.

Les proportions respectives de cérium et de zirconium peuvent être quelconques.

On peut préparer une composition utilisable pour l'invention en imprégnant un oxyde de cérium et/ou de zirconium ou un précurseur de cet oxyde avec une solution d'un composé du manganèse puis en calcinant l'oxyde imprégné.

On effectue l'imprégnation par mélange de l'oxyde à imprégner ou de son précurseur et d'une solution d'un composé du manganèse choisi parmi les composés décomposables thermiquement en oxyde.

Comme composés convenables du manganèse, on peut citer utiliser ceux décrits précédemment.

Il est notamment possible d'imprégner l'oxyde par trempage de celui-ci dans la solution du composé de manganèse et d'éliminer l'excès de solution par égouttage ou par passage dans un évaporateur rotatif.

Selon une variante préférée, l'imprégnation est réalisée "à sec", c'est à dire que le volume total de solution utilisée est approximativement égal au volume poreux total développé par l'oxyde à imprégner. Concernant la détermination de ce volume poreux, elle peut être réalisée selon la méthode connue au porosimètre à mercure ou bien par mesure de la quantité d'eau absorbée par un échantillon.

Dans une deuxième étape, on sèche l'oxyde imprégné pour éliminer l'eau, en laissant ainsi le composé de manganèse sous une forme dispersée de manière homogène et intime dans, ou à la surface de, l'oxyde.

Le séchage est le plus souvent effectué à l'air, à une température qui peut varier entre 80 et 300°C et choisie de préférence entre 100 et 150°C. Le séchage est poursuivi jusqu'à l'obtention d'un poids constant. Généralement, la durée du séchage est comprise entre 1 et 24 heures.

Enfin, dans une troisième étape, on calcine l'oxyde imprégné dans les mêmes conditions que celles décrites précédemment.

Les gaz susceptibles d'être traités par la présente invention sont, par exemple, ceux issus de turbines à gaz, de chaudières de centrales thermiques ou encore de moteurs à combustion interne, notamment de moteurs diesel ou de moteurs fonctionnant en mélange pauvre.

L'invention s'applique au traitement des gaz qui présentent une teneur élevée en oxygène et qui contiennent des oxydes d'azote, en vue de réduire les émissions de ces oxydes. Par gaz présentant une teneur élevée en oxygène, on entend des gaz présentant en permanence un excès d'oxygène par rapport à la valeur stoechiométrique λ = 1. La valeur λ est corrélée au rapport air/carburant d'une manière connue en soi notamment dans le domaine des moteurs à combustion interne. En d'autres termes, l'invention s'applique au traitement des gaz issus de systèmes du type décrit au paragraphe précédent et fonctionnant en permanence dans des conditions telles que λ soit toujours strictement supérieur à 1. L'invention s'applique aussi au traitement des gaz qui présentent une teneur en oxygène (exprimée en volume) d'au moins 5%, plus particulièrement d'au moins 10%, cette teneur pouvant par exemple se situer entre 5 et 20%.

Les gaz peuvent contenir des hydrocarbures et, dans un tel cas, une des réactions que l'on cherche à catalyser est la réaction HC (hydrocarbures) + NOₓ.

Les hydrocarbures qui peuvent être utilisés comme agent réducteur pour l'élimination des NOx sont notamment les gaz ou les liquides des familles des carbures saturés, des carbures éthyléniques, des carbures acétyléniques, des carbures aromatiques et les hydrocarbures des coupes pétrolières comme par exemple le méthane, l'éthane, le propane, le butane, le pentane, l'hexane, l'éthylène, le propylène, l'acétylène, le butadiène, le benzène, le toluène, le xylène, le kérosène et le gaz oil.

Les gaz peuvent contenir aussi comme agent réducteur, des composés organiques contenant de l'oxygène. Ces composés peuvent être notamment les alcools du type par exemple alcools saturés comme le méthanol, l'éthanol ou le propanol; les éthers comme l'éther méthylique ou l'éther éthylique; les esters comme l'acétate de méthyle et les cétones.

Il faut noter cependant que selon une caractéristique intéressante de l'invention, le procédé de traitement peut être réalisé sur un gaz sans la présence d'un hydrocarbure.

Les compositions de l'invention peuvent être utilisées dans des systèmes catalytiques comprenant un revêtement (wash coat) à base d'un support du type alumine ou silice par exemple et de ces compositions, sur un substrat du type par exemple monolithe métallique ou en céramique.

Divers systèmes catalytiques incorporant les compositions de l'invention peuvent être envisagés.

Ainsi, selon un premier mode le système comporte, disposé en amont dans le sens de circulation du gaz, un premier élément comprenant un substrat du type monolithe métallique ou en céramique qui comporte un revêtement catalytique à base d'un support comme de l'alumine ou de la silice et d'au moins un métal précieux qui peut être par exemple le platine, le palladium, le rhodium ou l'iridium. En outre, le système comporte un second élément, en aval du premier, comprenant la composition catalytique de l'invention. Ce second élément peut se présenter par exemple sous forme de billes ou d'un monolithe.

Selon un autre mode de réalisation, le système catalytique peut être constitué d'un substrat avec un revêtement catalytique comprenant soit une première couche incorporant la composition catalytique de l'invention et une seconde couche incorporant au moins un métal précieux du type indiqué dans la description du mode de réalisation décrit précédemment, soit une couche unique comprenant un mélange de la composition catalytique et d'au moins un métal précieux.

Enfin, selon un autre mode de réalisation, le système catalytique peut se présenter sous forme d'un mélange de la composition catalytique précitée sur un premier support et d'au moins un métal précieux sur un deuxième support, les supports pouvant être identiques ou différents. Par exemple, il peut s'agir d'un mélange de billes ou de granulés à base d'alumine ou de silice et supportant les unes le métal précieux, les autres la composition selon l'invention.

Les systèmes sont montés d'une manière connue dans les pots d'échappement des véhicules dans le cas de l'application au traitement des gaz d'échappement.

Des exemples vont maintenant être donnés.

Dans les exemples donnés ci-dessous, les produits obtenus sont testés de la manière suivante pour évaluer leurs performances catalytiques.

On charge 50mg du catalyseur en poudre dans un réacteur en quartz. La poudre utilisée a préalablement été compactée puis broyée et tamisée de manière à isoler la tranche granulométrique comprise entre 0,125 et 0,250mm.

Le mélange réactionnel à l'entrée du réacteur a la composition suivante (en volume) :
- NO = 300 vpm
- C₃H₆ = 300 vpm
- CO = 350 vpm
- O₂ = 10%
- CO₂ = 10%
- H₂O = 10%
- N₂ = qsp 100%

Le débit global est de 30 Nl/h.

La VVH est de l'ordre de 500.000 h⁻¹.

Les signaux de HC (C₃H₆), CO, N₂O, NO et NOₓ (NOₓ = NO + NO₂) sont enregistrés en permanence ainsi que la température dans le réacteur.

Le signal de HC est donné par un détecteur BECKMAN d'HC totaux, basé sur le principe de la détection par ionisation de flamme.

Les signaux de NO et NOₓ sont donnés par un analyseur de NOₓ ECOPHYSICS, basé sur le principe de la chimie-luminescence : il donne les valeurs de NO, NOₓ et NO₂, cette dernière étant calculée par différence des signaux de NOₓ et NO.

Les signaux de CO et N₂O sont donnés par des analyseurs à infra-rouge ROSEMOUNT.

L'activité catalytique est mesurée à partir des signaux HC, NO, N₂O et NOₓ en fonction de la température lors d'une montée en température programmée de 150 à 700°C à raison de 15°C/mn et à partir des relations suivantes :
- Le taux de conversion de NO (TNO) en % qui est donné par :
   T(NO) = 100(NO°-NO)/ NO° avec NO° signal de NO à l'instant t = 0 qui correspond au signal de NO obtenu avec le mélange réactionnel lors du by-pass du réacteur catalytique et NO est le signal de NO à l'instant t.
- Le taux de conversion de HC (THC) en % qui est donné par :
   T (HC) = 100(HC°-HC)/HC° avec HC° signal de HC à l'instant t = 0 qui correspond au signal de HC obtenu avec le mélange réactionnel lors du by-pass du réacteur catalytique et HC est le signal de HC à l'instant t.
- Le taux de conversion des NOₓ (TNOₓ) en % qui est donné par :
   T(NOₓ) = 100(NOₓ°-NOₓ)/NOₓ° avec NOₓ° signal de NOₓ à l'instant t = 0 qui correspond au signal de NOₓ obtenu avec le mélange réactionnel lors du by-pass du réacteur catalytique et NOₓ est le signal de NOₓ à l'instant t.
- Le taux de conversion des NOₓ en N₂O (TN₂O) en % qui est donné par :
   T(N₂O) = 200(N₂O-N₂O°)/NOₓ° avec N₂O° signal de N₂O à l'instant t = 0 qui correspond au signal de N₂O obtenu avec le mélange réactionnel lors du by-pass du réacteur catalytique et N₂O est le signal de N₂O à l'instant t.

### Exemples

### I - Synthèse des catalyseurs

### - Matières premières :

On utilise le nitrate de manganèse (Mn(NO₃)₂, 4H₂O).

Les supports utilisés sont de l'oxyde de cérium CeO₂ RHONE-POULENC, un oxyde cérium-zirconium (30% en poids de ZrO2) RHONE-POULENC.

### - Synthèse :

Deux techniques ont été utilisées.

La première technique est l'imprégnation à sec. Elle consiste à imprégner le support considéré avec l'élément actif dissout dans une solution de volume égal au volume poreux du support (déterminé à l'eau : 0,35 cm³/g dans le cas de CeO₂ et 0,44 cm³/g de CeO₂-ZrO₂ et de concentration permettant d'atteindre le dopage recherché.

Le protocole opératoire suivi est le suivant :
- Imprégnation à sec du manganèse
- Séchage à l'étuve (110°C, 2 h)
- Calcination à 750°C pendant 2 h, montée à 5°C/min.

Les produits ont été caractérisés par diffraction des rayons X et leur surface spécifique a été déterminée par mesure BET un point.
- Calcination à 750°C penant 2 h, montée à 5°C/min.

### - Produits obtenus

Avec un support CeO₂:
- Produit 1 : [Mn] = 10% atomique (soit [Mn] / ([Mn] + [CeO₂]) = 0,01), préparé par imprégnation et calcination à 750°C, SBET = 50 m²/g
   Avec un support CeO₂-ZrO₂
- Produit 2 : [Mn] = 10% atomique, SBET = 48m²/g
   Avec un support ZrO₂

### II - Performances catalytiques

### Exemple n° 1 (comparatif)

Les performances du catalyseur comparatif à base de CeO₂ uniquement sont portées sur le tableau I.

**Tableau I**

| **Température (°C)** | **THC (%)** | **TNO (%)** | **TNOx (%)** | **TN**_{**2**}**O (%)** |
|---|---|---|---|---|
| 200 | 0 | 0,1 | 0 | 0 |
| 250 | 0 | 2,0 | 0 | 0 |
| 300 | 0 | 13,4 | 0 | 0 |
| 350 | 0,1 | 16,3 | 0 | 0 |
| 400 | 4,8 | 14,8 | 0 | 0 |
| 450 | 22,7 | 11,9 | 0 | 0 |
| 500 | 56,2 | 11,0 | 0 | 0 |
| 550 | 82,0 | 8,9 | 0 | 0 |
| 600 | 93,7 | 6,4 | 0 | 0 |
| 650 | 97,4 | 4,2 | 0 | 0 |
| 700 | 99,9 | 2,8 | 0 | 0 |

On voit que l'activité catalytique vis-à-vis de la réduction des émissions de NOₓ est nulle. Le catalyseur présente uniquement une activité vis-à-vis de l'oxydation du NO en NO₂.

### Exemple n° 2

Les performances du produit 1 sont portées sur le tableau II.

**Tableau II**

| **Température (°C)** | **THC (%)** | **TNO (%)** | **TNOx (%)** | **TN**_{**2**}**O (%)** |
|---|---|---|---|---|
| 200 | 0,8 | 0 | 0 | 0 |
| 250 | 13,7 | 0 | 0 | 0 |
| 300 | 62,5 | 0,3 | 0 | 0 |
| 350 | 95,3 | 26,9 | 14,1 | 0 |
| 400 | 99,8 | 44,1 | 22,1 | 0 |
| 450 | 100 | 31,1 | 13,3 | 0 |
| 500 | 100 | 19,1 | 6,2 | 0 |
| 550 | 100 | 11,2 | 2,6 | 0 |
| 600 | 100 | 5 | 0 | 0 |
| 650 | 100 | 2,6 | 0 | 0 |
| 700 | 100 | 0,3 | 0 | 0 |

Dans les conditions données de VVH, on ne détecte pas de N₂O.

### Exemples n° 3 et 4

Dans ces exemples, les produits 1 et 2 ont été testés en supprimant l'hydrocarbure et CO dans le mélange réactionnel. Un débit équivalent d'azote lui est substitué pour permettre de travailler dans les mêmes conditions de débit global.

**Tableau III**

| Activité catalytique du produit 1 | | |
|---|---|---|
| **Température** (°C) | **TNO** (%) | **TNOx** (%) |
| 200 | 9 | 4,6 |
| 250 | 19,1 | 12,2 |
| 300 | 32,7 | 16,8 |
| 350 | 50,8 | 26,2 |
| 400 | 51,7 | 27,6 |
| 450 | 34,9 | 15,4 |
| 500 | 20 | 5,6 |
| 550 | 12,3 | 2,1 |
| 600 | 6,2 | 0,1 |
| 650 | 3,6 | 0 |
| 700 | 2,3 | 0 |

**Tableau IV**

| Activité catalytique du produit 2 | | |
|---|---|---|
| **Température (°C)** | **TNO (%)** | **TNOx (%)** |
| 200 | 10,9 | 3,8 |
| 250 | 20,1 | 9,2 |
| 300 | 39,2 | 17,7 |
| 350 | 56,1 | 27,7 |
| 400 | 48,4 | 22 |
| 450 | 31,9 | 11,9 |
| 500 | 18,7 | 4,1 |
| 550 | 10,1 | 0 |
| 600 | 6 | 0 |
| 650 | 1,9 | 0 |
| 700 | 0,3 | 0 |

## Revendications

1. Procédé de traitement de gaz, à teneur élevée en oxygène, en vue de la réduction des émissions des oxydes d'azote, le gaz présentant un excès d'oxygène par rapport à la valeur stoechiométrique λ = 1 ou présentant une teneur en oxygène (exprimée en volume) d'au moins 5%, **caractérisé en ce qu'**on utilise une composition catalytique consistant en de l'oxyde de manganèse déposé sur un support d'oxyde de cérium ou d'oxyde de zirconium ou d'un oxyde mixte de cérium et de zirconium.

2. Procédé selon la revendication 1, **caractérisé en ce qu'**on utilise une composition catalytique dans laquelle le manganèse est présent dans une quantité exprimée en teneur atomique en manganèse par rapport au nombre de moles d'oxyde de cérium et d'oxyde de zirconium d'au plus 50%, plus particulièrement d'au plus 20%.

3. Procédé selon l'une des revendications précédentes, **caractérisé en ce qu'**on traite un gaz d'échappement d'un moteur à combustion interne, plus particulièrement d'un moteur diesel ou d'un moteur fonctionnant en mélange pauvre.

## Patentansprüche

1. Verfahren zur Behandlung von Gas, welches einen hohen Gehalt an Sauerstoff aufweist, im Hinblick auf die Verringerung der Emissionen von Stickstoffoxiden, wobei das Gas im Verhältnis zu dem stöchiometrischen Wert λ = 1 einen Überschuß an Sauerstoff aufweist oder einen Gehalt an Sauerstoff (ausgedrückt als Volumen) von wenigstens 5 % aufweist, **dadurch gekennzeichnet, daß** man eine katalytische Zusammensetzung verwendet, die aus Manganoxid besteht, das auf einem Träger aus Ceroxid oder Zirkoniumoxid oder einem Mischoxid von Cer und Zirkonium abgeschieden ist.

2. Verfahren nach Anspruch 1, **dadurch gekennzeichnet, daß** man eine katalytische Zusammensetzung verwendet, in welcher das Mangan in einer Menge vorliegt, die ausgedrückt als atomarer Gehalt an Mangan im Verhältnis zu der Anzahl von Molen an Ceroxid und Zirkoniumoxid höchstens 50 %, stärker bevorzugt höchstens 20 % beträgt.

3. Verfahren nach einem der vorhergehenden Ansprüche, **dadurch gekennzeichnet, daß** man ein Auspuffgas eines Verbrennungsmotors, insbesondere eines Dieselmotors oder eines Motors, welcher mit einem armen Gemisch läuft, behandelt.

## Claims

1. A process for treating a gas with a high oxygen content in order to reduce oxides of nitrogen emissions, the gas having an excess of oxygen with respect to the stoichiometric value λ=1 or having an oxygen content (expressed by volume) of at least 5%, **characterized in that** a catalytic composition is used that consists of manganese oxide deposited on a support of cerium oxide or zirconium oxide or a mixed cerium and zirconium oxide.

2. A process according to claim 1, **characterized in that** a catalytic composition is used in which the manganese is present in a quantity, expressed as the atomic content of the manganese with respect to the number of moles of cerium oxide and zirconium oxide, of at most 50%, more particularly at most 20%.

3. A process according to any one of the preceding claims, **characterized in that** an exhaust gas from an internal combustion engine is treated, more particularly from a diesel engine or a lean burn engine.
